# EUROPEAN PATENT APPLICATION

(11) **EP 4 786 341 A1**
(43) Date of publication of application: **05.08.2026**
(21) Application number: 25382063.3
(22) Date of filing: 31.01.2025
(51) Int. Cl.: B64G 1/22, E05B 63/12, F16B 21/02

(54) **HOLD DOWN AND RELEASE DEVICE**

(71) Applicant: Occam Space, S.L., 28919 Leganés Madrid (ES)
(72) Inventor: SERRANO SERRANO, Manuel, 28919 Leganés (ES); MONTE ÁLVAREZ, Pablo, 28919 Leganés (ES); GARCÍA GUZMÁN, Francisco, 28919 Leganés (ES); ARAUZO ANDRÉS, Inés, 28919 Leganés (ES); LIWAG SANCHO, Joseph Manuel, 28919 Leganés (ES); GARCÍA MORENO, Alberto, 28919 Leganés (ES); CRESPO MENÉNDEZ, Carlos, 28919 Leganés (ES)
(74) Representative: Elzaburu S.L.P.

(57) **Abstract**

Hold down and release device (1), suitable for switching from a hold down or closed position to a release or open position, that comprises:
- a housing (2) comprising a through hole (3) and several guide means (4) configured to delimit radial channels (5) starting from the through hole (3),
- a ring element (6) with a central cavity (15) and placed on the housing (2) concentrically with respect to the through hole (3) of the housing (2), the wall delimiting the central cavity (15) having several recesses (20) on it, such that the guide means (4) are placed inside the cavity (15) and surrounded by the ring element (6), the ring element (6) being configured to rotate on the housing (2) around an axis of the through hole (3),
- at least three assemblies, each of them comprising a block (7) and at least an additional element (8, 8', 8"), such that each assembly is placed on a channel (5) delimited by two of the guide means (4), the additional element (8) being connected to the block (7) on the end of the block (7) which is more distant from the through hole (3), the additional element (8, 8', 8") being configured to couple in one of the recesses (20) of the ring element (6), and
- activation means configured to actuate on the ring element (6) to be able to rotate it.

## Description

### Field of the invention

The invention refers to a hold down and release device, which can have a variety of applications, for instance space, aerial or ground applications, where two parts need to be held together and be separated.

### Background of the invention

Currently the are many hold down and release devices that hold a releasable body, using different constructive architectures.

US9761401B1 discloses a hold-down release apparatus that includes a housing, a reciprocating retention member, a release member, bias member(s), and a fuse wire. The retention member moves between retention and release positions and is biased toward the release position. With the retention member in the release position, the release member can move out of the housing; with the retention member in the retention position, the retention member obstructs the release member from moving out of the housing. The fuse wire obstructs movement of the retention member to the release position and holds the retention member in the retention position against the bias force. With an actuation current flowing through the fuse wire, the bias force breaks the fuse wire, allowing the retention member to move to the release position in response to the bias force, and the release member to move out of the housing.

US10062537B1 discloses a release apparatus that includes a coiled restraining wire with each end attached to a corresponding fuse wire. The fuse wires are supplied with respective actuation electric currents by respective independent current sources. Flow of actuation current through a fuse wire causes that fuse wire to break; breakage of either one or both fuse wires allows the restraining wire to partially uncoil and allow the release apparatus to transition from a retained condition to a released condition, by allowing disengagement of retention members from a release member that can then move out of the release apparatus. The release apparatus can be employed to attach a deployable component to a satellite or spacecraft, and can be readily repaired, refurbished or reset for repetitive ground testing. DE102022129934A1 discloses an actuator module for releasing a release body, having a module base and a holding element which can rotate in a plane between a standby position and an operating position and is designed as a lever, which prevents release of the release body in the standby position and allows release of the release body from the plane in the operating position. The actuator module comprises a blocking body movable between a blocking position and a release position, which in its blocking position causes a blocking of a movement of the at least one holding element from the ready position into the working position and in its release position permits a movement of the at least one holding element from the ready position into the working position, and an actuator device for moving the blocking body from the blocking position into the release position, wherein the actuator device comprises at least one actuator component made of a shape memory material. A system and a satellite are also described, each comprising the actuator module.

WO2020048313A1 discloses a split nut type unlocking device with a non-explosive actuator, relating to the technical field of unlocking mechanisms in the mechanical, aeronautics and astronautics fields. In a locking state, a split nut is tightened by tightening balls and a thread is engaged, so as to achieve a connecting function. When there is a need to separate, the non-explosive actuator pushes an unlocking sliding block to move upward, the constraint on a tightening hoop is released, and then the constraint on the split nut is released, and the split nut is spread apart under the action of a separation/reset spring, so that the thread connection fails and the unlocking is completed. When there is a need to reset, a reset assembly is inserted from the bottom of the unlocking device, the tightening hoop is pushed up to its position before the unlocking, the unlocking sliding block pushes clamping balls down, and the tightening hoop is clamped again, and at the same time, the tightening hoop also pushes all the tightening balls back to their position before the unlocking, and the split nut is tightened again, such that the reset is completed. The split nut type unlocking device has the advantages of simple structure, compact size, high unlocking reliability and convenient reset.

Many of these apparatus or devices are not reversible, i.e., they need reassembly or replacement of some elements to return to the initial condition.

Accordingly, there is a need to provide a hold down and release device that can hold high loads and be resettable without the need to disassemble the device or to replace some of its components.

### Summary of the invention

The object of the invention is to provide a hold down and release device that overcomes the mentioned drawbacks.

The invention provides a hold down and release device suitable for switching from a hold down or closed position to a release or open position that comprises:
- a housing comprising a through hole and several guide means configured to delimit radial channels starting from the through hole,
- a ring element with a central cavity and placed on the housing concentrically with respect to the through hole of the housing, the wall delimiting the central cavity having several recesses on it, such that the guide means are placed inside the cavity and surrounded by the ring element, the ring element being configured to rotate on the housing around an axis of the through hole,
- at least three assemblies, each of them comprising a block and at least an additional element, such that each assembly is placed on a channel delimited by two of the guide means, the additional element being connected to the block on the end of the block which is more distant from the through hole, the additional element being configured to couple in one of the recesses of the ring element, and
- activation means configured to actuate on the ring element to be able to rotate it.

The invention also provides an assembly comprising a hold down and release device of the invention and a releasable element.

The device of the invention is reversible, which means that it is resettable by simply reversing the movement of the ring element from open to closed position without the need to disassemble the device or replacing components.

Another advantage of the invention is that it allows the handling of larger loads and their release with a lower activation force.

Other characteristics and advantages of the present invention will be clear from the following detailed description of several embodiments illustrative of its object in relation to the attached figures.

### Brief description of drawings

Figure 1 shows an exploded view of an embodiment of the hold down and release device of the invention.
Figure 2a shows a perspective view of a hold down and release device of the invention in a closed position.
Figure 2b shows a perspective view of a hold down and release device of the invention in an open position.
Figure 2c shows a plan view of a hold down and release device of the invention in a closed position.
Figure 2d shows a plan view of a hold down and release device of the invention in an open position.
Figures 3a, 3b and 3c show a sequence of the release of a releasable element from the hold down and release device of the invention, where the releasable element is a bolt/screw
Figures 4a, 4b and 4c show a sequence of the release of another releasable element from the hold down and release device of the invention.
Figure 5a shows a hold down and release device of the invention with an end-stop.
Figures 5b and 5c show a hold down and release device of the invention with another end-stop.
Figure 6a is an exploded view of another embodiment of the hold down and release device of the invention.
Figure 6b shows a plan view of the hold down and release device of Figure 6a in a closed position.
Figure 6c shows a plan view of the hold down and release device of Figure 6a in an open position.
Figure 7a is an exploded view of another embodiment of the hold down and release device of the invention.
Figure 7b shows a plan view of the hold down and release device of Figure 6a in a closed position.
Figure 7c shows a plan view of the hold down and release device of Figure 6a in an open position.
Figure 8a shows a perspective view of a hold down and release device of the invention in a closed position in which the elastic elements between blocks are helicoidal compression springs.
Figure 8b is a detail of Figure 8a.
Figure 8c is a plan view of the hold down and release device of Figure 8a in a closed position.
Figure 8d is a plan view of the hold down and release device of Figure 8a in an open position.
Figure 9a is a perspective view of the hold down and release device of Figure 5a in a closed position with a spring to keep the device against the end-stop.
Figure 9b is a perspective view of the hold down and release device of Figure 8a in a closed position with a spring to keep the device against the end-stop.
Figure 10a is a perspective view of the hold down and release device of Figure 9a with an activation means that is a cable/wire.
Figure 10b is a is a perspective view of the hold down and release device of Figure 9a with another activation means that is a fuse wire.
Figure 11a is a perspective view of the hold down and release device of Figure 9a with another activation means.
Figure 11b is a plan view of the hold down and release device of Figure 11a in a closed position.
Figure 11c is a plan view of the hold down and release device of Figure 11a in an open position.
Figure 12 is a partial plan view of the hold down and release device of the invention showing the decomposition of forces of the system in a closed position of the device.
Figure 13 is a partial plan view of the hold down and release device of the invention showing the decomposition of forces of the system in a starting position of opening of the device.
Figure 14 is a partial plan view of the hold down and release device of the invention in an open position.

### Detailed description of the invention

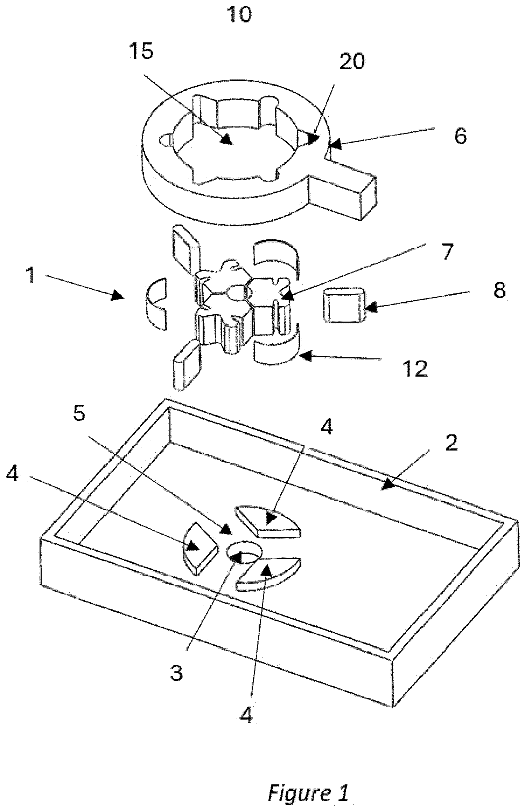

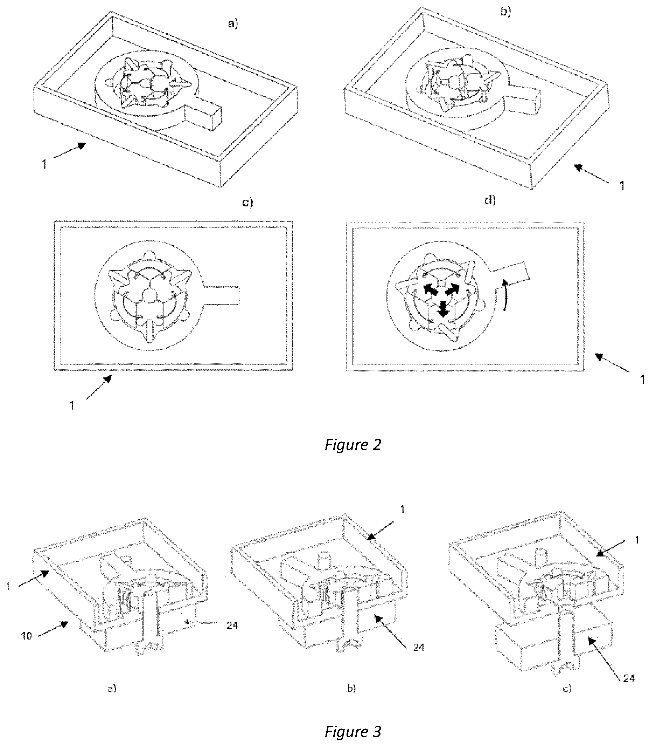

Figures 1, 2a, 2b and 2c show an embodiment of the hold down and release device 1 of the invention.

Figure 1 shows an exploded view of this embodiment of the hold down and release device 1 in which the different elements that constitute it can be better seen:
- a housing 2 comprising a through hole 3 and several guide means 4 around the through hole 3; these guide means 4 are configured to delimit radial channels 5 starting from the through hole 3,
- a ring element 6 with a central cavity 15 and placed on the housing 2 concentrically with respect to the through hole 3 of the housing 2; the wall delimiting the central cavity 15 has several recesses 20 on it, such that the guide means 4 are placed inside the cavity 15 and surrounded by the ring element 6; the ring element 6 is configured to rotate on the housing 2 around an axis of the through hole 3,
- at least three assemblies, each of them comprising a block 7 and at least an additional element 8, such that each assembly is placed on a channel 5 delimited by two of the guide means 4; the additional element 8 is connected to the block 7 on the end of the block 7 which is more distant from the through hole 3; the additional element 8 is configured to couple in one of the recesses 20 of the ring element. 6

The hold down and release device of the invention also comprises activation means configured to actuate on the ring element 6 to be able to rotate it (not shown in Figure 1).

When the hold down and release device 1 is in the closed position (Figure 2a or Figure 3a, for example) the blocks 7 hold a releasable element 24 in place while they are restrained between the releasable element 24 and the ring element 6 by means of the additional elements 8.

When the ring element 6 is turned by means of an activation mechanical force, it changes the position of the additional elements 8, so that they allow the blocks 7 to move radially outwards (i.e., away from the though hole 3) and therefore allowing the releasable element 24 to release (Figure 2d or Figure 3c, for example).

The blocks 7 can comprise a thread machined on the side that faces to the central though hole 3 forming a segmented nut, so that when they are in a closed position a screw or a threaded releasable body can be screwed and tightened. In order to release the screw or threaded releasable body, the blocks 7 move radially outwards to the open position (see Figure 2d).

The blocks 7 can also comprise a sleeve, a cone or any other type of shape machined instead of the thread, in order to be able to keep the releasable element 24 locked when the blocks 7 are in the closed position until the blocks 7 move to the open position.

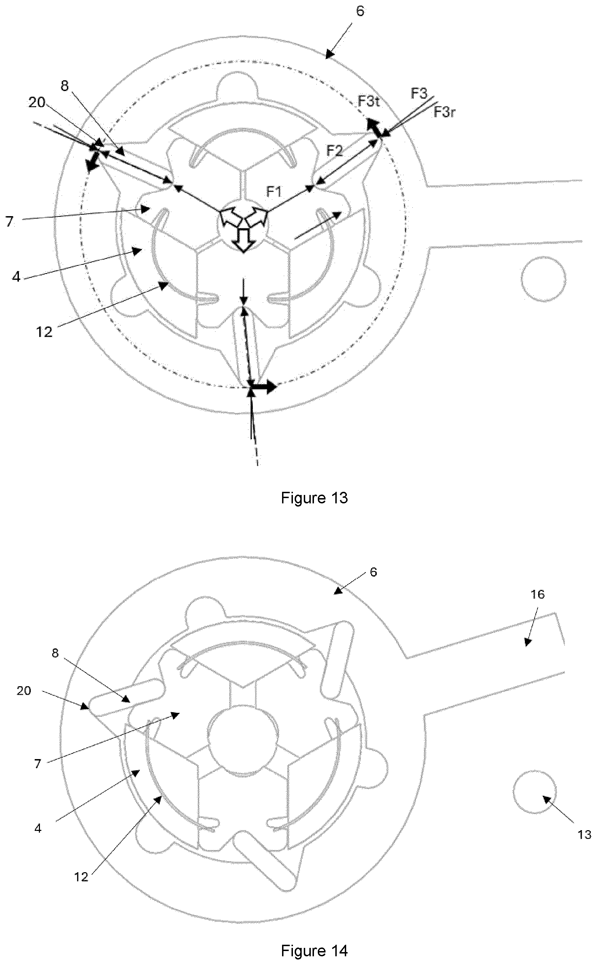

The geometry of the wall of the ring element 6 delimiting the central cavity 15, the additional elements 8 and the outer face of the blocks 7 allows that upon a turn of the ring element 6 the normal vector of each individual contact surface turns creating a tangential component of force in the same direction of the turn of the ring element 6 (see Figure 13), so that the systems are no longer in equilibrium and tend to open the blocks 7 completely until the open position, (see Figure 14).

The hold down and release device 1 of the invention is reversible, meaning that it can be returned from the open position (Figures 2b and 2d) to the closed position (Figures 2a and 2c) by turning back the ring element 6 to the initial position. The additional elements 8 and the blocks 7 go back to the closed position pushed by the ring element 6 and the contact between them.

The invention also provides an assembly 10 comprising a hold down and release device 1 of the invention and a releasable element 24.

Figures 3a, 3b and 3c show an embodiment of an assembly 10 comprising a hold down and release device 1 of the invention and a releasable element 24. The releasable element 24 in this embodiment is a body with a screw. The releasable element 24 is coupled to the hold down and release 1 device through the through hole 3 of the housing 2. Figures 3a, 3b and 3c show the sequence of the release of the releasable element 24 from the hold down and release device 1 of the invention, with a closed position (Figure 3a), an intermediate position (Figure 3b) and an open position (Figure 3c). In this open position the releasable element 24 is released from the hold down and release device 1 of the invention (Figure 3c shows the separation of these elements).

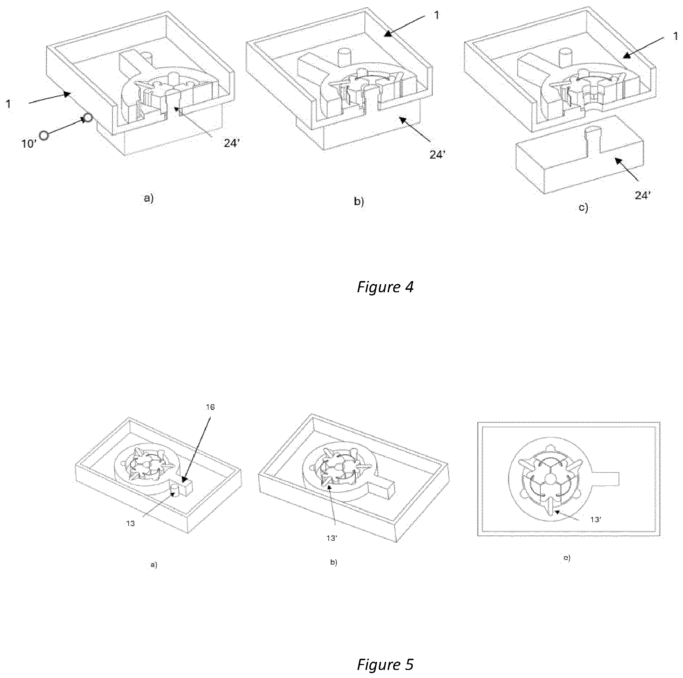

Figures 4a, 4b and 4c show an embodiment of an assembly 10' comprising a hold down and release device 1 of the invention and a releasable element 24'. The releasable element 24' in this embodiment is a body with a protrusion that is not a screw. The releasable element 24' is coupled to the hold down and release device 1 through the through hole 3 of the housing 2. Figures 4a, 4b and 4c show the sequence of the release of the releasable element 24' from the hold down and release device 1 of the invention, with a closed position (Figure 4a) an intermediate position (Figure 4b) and an open position (Figure 4c). In this open position the releasable element 24' is released from the hold down and release device 1 of the invention (Figure 4c shows the separation of these elements).

In another embodiment of the invention, a set of elastic means 12 connecting each two adjacent assemblies (as in Figures 1, 2a, 2b, 2c and 2d) creates a permanent force that pushes the blocks 7 outwards to maintain the contact between the blocks 7, the additional elements 8 and the ring element 6, even when there is no release element 24, 24' installed that may provide an outward radial force to the blocks 7. The elastic means 12 can also be provided between the blocks 7 and the housing 2, and between the blocks 7 and the ring element 6.

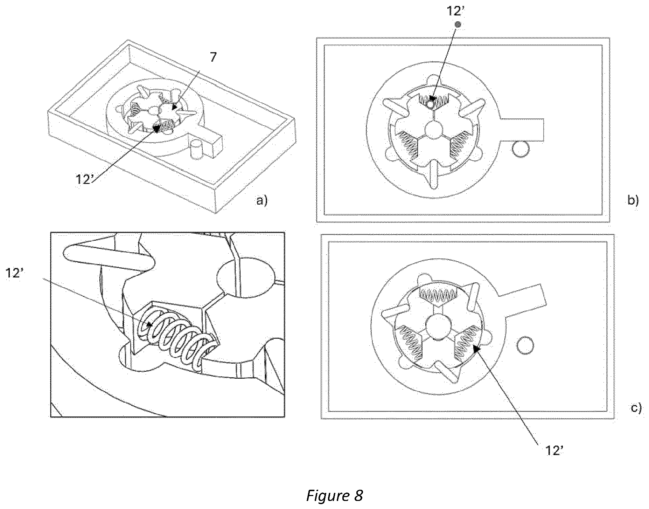

These elastic means 12 can be made in any shape or material that provides expansion force. They can be springs 12' (Figures 8a, 8b, 8c and 8d), blades or elastomers. Figures 1, 2a, 2b, 2c and 2d show elastic straps as elastic means.

Figure 5a shows a hold down and release device 1 of the invention with an end-stop 13 external to the ring element 6. Figures 5b and 5c show a hold down and release device 1 of the invention with another end-stop 13', which is internal to the ring element 6.

These end-stops 13, 13' are configured to limit the turn of the ring element 6. In the closed position the system is in equilibrium, so there is no need for external forces to keep it in that position. However, it is desirable to improve the stability and prevent the inadvertent release due to dynamic loads when the system is subjected to vibration environments or external shocks. This mechanical limit of the turn of the ring element 6 only in one direction can be achieved by a mechanical end stop, as the ones shown in Figures 5a, 5b and 5c.

In Figure 5a, a protrusion 16 of the ring element 6 is configured to contact the end-stop 13.

In Figures 5b and 5c, the configuration of the recesses 20 of the internal wall of the ring element 6 constitutes the end-stop 13', in which one of the walls of the recesses 20 is in contact with the corresponding additional element 8 of the assembly in the closed position, preventing the turn of the ring element 6 in one direction.

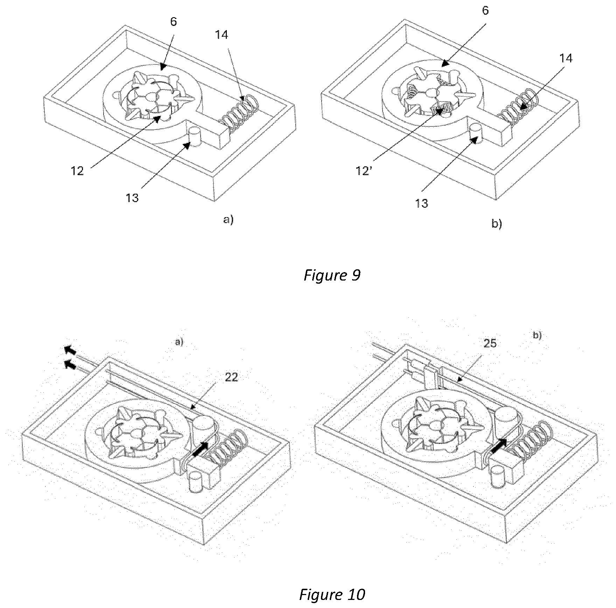

Additionally, a second elastic means 14 is provided, which is configured to be able to force the ring element 6 against the end-stop 13. The second elastic means 14 can be a spring that is supported by the housing 2 and the ring element 6 (see Figures 9a and 9b).

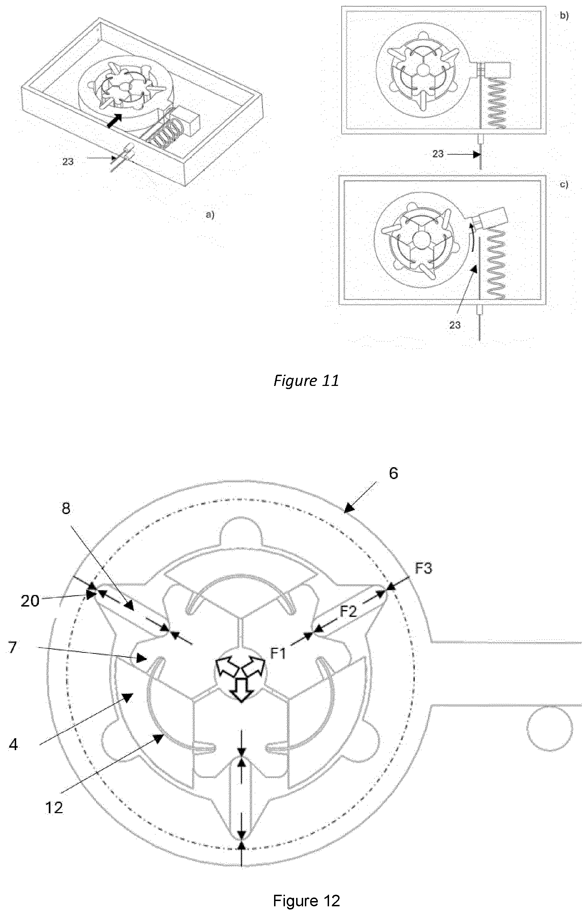

The additional elements 8 in the assemblies can have several configurations. In Figures 1 or 12 each additional element 8 has the shape of a straight bar with semicylindrical ends, configured to contact the corresponding recess 20, 21 of the ring element 6 and the corresponding block 7. The recesses 20, 21 of the ring element 6 and the block 7 have a mating semicylindrical shape to allow the pivoting of the additional element 8 with respect to the axis of the semicylindrical ends of the additional element 8. These axes are parallel to the axis of the through hole 3 of the housing 2. The additional elements 8 are radially arranged in the closed position (see also Figure 12) so that the resultant radial force of the blocks 7 does not create any torque in the ring element 6.

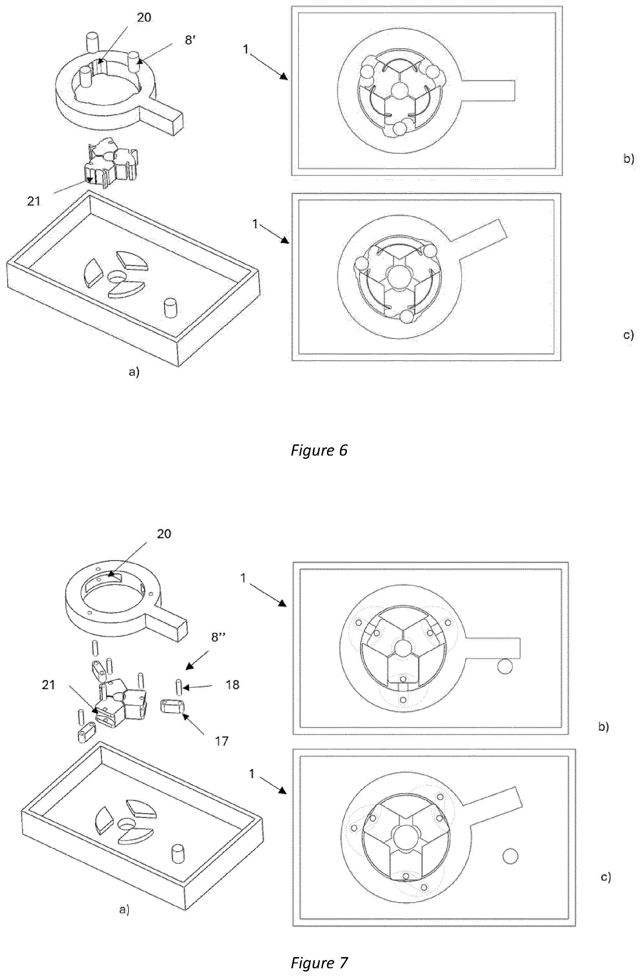

In Figures 6a, 6b and 6c, each additional element 8 is a cylindrical roller 8' arranged parallel to the axis of the through hole 3 of the housing 2. The rollers 8' roll over gaps on the blocks 7 and on the recesses 20 of the inner wall of the ring element 6. The gaps on the blocks 7 are configured so that in the closed position the roller separates the corresponding block 7 from the corresponding ring element 6 and pushes the block 7 in the direction towards the through hole 3 of the housing 2, and in the open position the roller 8' moves outwards and allows the block 7 to move outwards (i.e., away from the through hole 3 of the housing 2). In the closed position the contact forces with the roller 8' are radially arranged with respect to the ring element 6, and the resultant torque on the ring element 6 is null.

In Figures 7a, 7b and 7c each additional element 8" is a straight bar 17 with shafts 18 on its ends configured to be connected to the ring element 6 and the block 7 in the corresponding recesses 20, 21 of the ring element 6 and the block 7. The straight bars 17 are arranged radially in the closed position so that the resultant radial force of the blocks 7 does not create any torque on the ring element 6.

The hold down and release device 1 of the invention comprises activation means (such as an actuator) that provides a force to activate the device initiating the rotation of the ring element 6.

In Figure 10a the activation means configured to actuate on the ring element 6 is a mechanical cable 22, which can be activated by an external force that pulls it

In Figure 10b the activation means configured to actuate on the ring element 6 is a shape memory alloy actuator 25, which is heated by the action of an electrical current passing through it or by applying direct heat to it. The shape memory alloy actuator 25 may be in the shape of a wire or any other shape able to apply a force to the ring element 6. This shape memory alloy actuator 25 is extended in the closed position and shrinks when it is heated by means of an external heat source or by passing an electrical current through it.

The activation force can also be provided by a bimetallic plate. When it is heated it applies force to the ring element 6 due to the different expansion coefficient of the metals forming the bimetallic plate.

In Figures 11a, 11b and 11c, the activation means configured to actuate on the ring element 6 is an elastic element retained by a fuse wire 23 until the activation. This elastic element can be a helical spring (as shown in Figures 11a, 11b and 11c), a flat spring or an elastomer. In the closed position it has strain energy accumulated and retained by the fuse wire 23. When an electrical current passes through the fuse wire 23, it heats and breaks, allowing the elastic element to turn the ring element 6 to the open position (Figure 11c).

The hold down and release device 1 may additionally comprise a cover for the housing 2 that covers the rest of the elements of the device.

Figure 12 is a partial plan view of the hold down and release device 1 of the invention showing the decomposition of forces of the system in a closed position of the device. In this position, all forces are radially aligned and no torque is generated on the ring element 5.

Such a large force reduction makes it possible to hold very large loads and to activate the release with low activation forces.

Figure 13 is a partial plan view of the hold down and release device 1 of the invention showing the decomposition of forces of the system in a starting position of opening of the device. A small rotation in the ring element 6 created by an activation means changes the position of the ring element 6, the blocks 7 and the additional elements 8, and the force passing through them (F2), not being radially aligned, in contact with the ring element 6, breaks down into two forces: a radial component F3r and a tangential component F3t, the latter (F3t) being the force that causes the ring element 6 to rotate to the open position Figure 14 shows a partial plan view of the hold down and release device 1 of the invention in the open position.

Although the present invention has been fully described in connection with preferred embodiments, it is evident that modifications may be introduced within the scope thereof, not considering this as limited by these embodiments, but by the contents of the following claims.

## Claims

1. Hold down and release device (1), suitable for switching from a hold down or closed position to a release or open position, **characterized in that** it comprises:
- a housing (2) comprising a through hole (3) and several guide means (4) around the through hole (3) configured to delimit radial channels (5) starting from the through hole (3),
- a ring element (6) with a central cavity (15) and placed on the housing (2) concentrically with respect to the through hole (3) of the housing (2), the wall delimiting the central cavity (15) having several recesses (20) on it, such that the guide means (4) are placed inside the cavity (15) and surrounded by the ring element (6), the ring element (6) being configured to rotate on the housing (2) around an axis of the through hole (3),
- at least three assemblies, each of them comprising a block (7) and at least an additional element (8, 8', 8"), such that each assembly is placed on a channel (5) delimited by two of the guide means (4), the additional element (8) being connected to the block (7) on the end of the block (7) which is more distant from the through hole (3), the additional element (8, 8', 8") being configured to couple in one of the recesses (20) of the ring element (6), and
- activation means configured to actuate on the ring element (6) to be able to rotate it.

2. Hold down and release device (1), according to claim 1, that additionally comprises elastic means (12) connecting each two adjacent assemblies.

3. Hold down and release device (1), according to claim 2, wherein the elastic means (12) can be springs, blades or elastomers.

4. Hold down and release device, according to any of the previous claims, that additionally comprises an end-stop (13) configured to limit the movement of the ring.

5. Hold down and release device (1), according to claim 4, that additionally comprises a second elastic means (14) configured to be able to force the ring element (6) against the end-stop (13).

6. Hold down and release device (1), according to claim 5, wherein the second elastic means (14) is a spring that is supported by the housing (2) and the ring element (6).

7. Hold down and release device (1), according to any of the previous claims, wherein the blocks (7) comprise a recess (21) on the end on which the additional element (8, 8', 8") is connected to the block (7).

8. Hold down and release device (1), according to any of claims 2 to 7, wherein the additional element (8) has the shape of a straight bar with semicylindrical ends.

9. Hold down and release device (1), according to any of claims 2 to 7, wherein the additional elements (8') are cylindrical rollers or spherical elements.

10. Hold down and release device (1), according to claim 7, wherein the additional elements (8") are straight bars (17) with shafts (18) on its ends configured to be connected to the ring element (6) and the block (7) in the corresponding recesses (20, 21).

11. Hold down and release device (1), according to any of the previous claims, wherein the activation means configured to actuate on the ring element (6) is a mechanical cable (22).

12. Hold down and release device (1), according to any of claims 1 to 10, wherein the activation means configured to actuate on the ring element (6) is an elastic element (19) retained by a fuse wire (23) until the activation.

13. Hold down and release device (1), according to any of claims 1 to 10, wherein the activation means configured to actuate on the ring element (6) is a shape memory alloy actuator (25).

14. Hold down and release device (1), according to any of the previous claims, that additionally comprises a cover for the housing (2) that covers the rest of the elements of the device.

15. Assembly (10, 10') comprising a hold down and release device (1) of any of claims 1 to 14 and a releasable element (24, 24'), wherein the releasable element (24, 24') is coupled to the hold down and release device (1) through the through hole (3) of the housing (2).
